Europäisches Patentamt

European Patent Office

Office européen des brevets

(11) Veröffentlichungsnummer: **0 218 108 B1**

(12) **EUROPÄISCHE PATENTSCHRIFT**

(45) Veröffentlichungstag der Patentschrift: **04.03.92**

(51) Int. Cl.⁵: **E04F 15/02**, E04F 15/024

(21) Anmeldenummer: **86112366.9**

(22) Anmeldetag: **06.09.86**

(54) **Fussbodenbelag.**

(30) Priorität: **05.10.85 DE 3535632**

(43) Veröffentlichungstag der Anmeldung:
**15.04.87 Patentblatt 87/16**

(45) Bekanntmachung des Hinweises auf die
Patenterteilung:
**04.03.92 Patentblatt 92/10**

(84) Benannte Vertragsstaaten:
**AT BE CH DE FR GB IT LI NL SE**

(56) Entgegenhaltungen:
DE-A- 2 102 050    DE-A- 2 650 160
DE-A- 2 930 426    DE-B- 1 267 828
DE-U- 8 518 325    FR-A- 1 133 496
FR-A- 1 307 901    GB-A- 2 127 062

(73) Patentinhaber: **Herforder Teppichfabrik Huchzermeyer & Co. GmbH
Oetinghauser Weg 90
W-4900 Herford(DE)**

(72) Erfinder: **Starp, Hubertus C.
Falkenweg 37
W-7400 Tübingen(DE)**
Erfinder: **Huchzermeyer, Cord-Henrich
Sauerbruchstrasse 46
W-4900 Herford(DE)**

(74) Vertreter: **TER MEER - MÜLLER - STEINMEI-
STER & PARTNER
Artur-Ladebeck-Strasse 51
W-4800 Bielefeld 1(DE)**

## Beschreibung

Die Erfindung betrifft einen Fußbodenbelag mit einem in einer Latex-Polyvinylchlorid-Bitumen-Schicht verankerten Faserflor, mit einer unterhalb dieser Schicht liegenden Unterschicht und einer unterhalb der Unterschicht liegenden Grundplatte aus Kunststoff, die mit ausgeprägten, konischen Noppen einstückig ausgestattet ist, die in Reihen mit Abstand unter Bildung von Kabelkanälen einseitig vorstehen.

Ein Fußbodenbelag dieser Art ist aus der DE-A-2 102 050 bekannt. Diese bekannte Platte wird bezeichnet als Bodenplatte zur Errichtung von mobilen Fußböden oder Podesten. Sie weist vor allem neben einer oberen, gegebenfalls aus mehreren Teilplatten bestehenden Platte aus einem festen Material wie etwa Holz oder Spanfaser eine unter dieser liegende Platte auf, die aus Kunststoff bestehen soll und tiefgezogene, nach unten vorspringende, konische Noppen aufweist. Diese nach unten gerichteten Noppen bilden Zwischenräume oder Kanäle, die zur Aufnahme von Leitungen und Kabeln geeignet sind. Die Noppen können von der Unterseite her in ihrem Mittelbereich eingezogen und innerhalb der dadurch gebildeten Vertiefung mit einem Füllmaterial gefüllt sein.

Aus der DE-A-2 650 160 ist eine im Prinzip ähnliche Bodenplatte bekannt, die jedoch zur Aufnahme von Heizschläuchen für Fußbodenhelzungen vorgesehen ist. Auch hier ist eine Grundplatte mit tiefgezogenen Noppen vorgesehen, die aus einer Kunststoffolie bestehen soll. Die Noppen können mit einer aushärtbaren Masse, etwa einem Kunststoff-Zement-Gemisch gefüllt sein.

Die FR-A-1 133 496 zeigt und beschreibt Sandwich-Platten mit zwei äußeren Schichten, zwischen denen ein Waffel- oder Wabenförmig geprägtes Gewebe oder Gewirke angeordnet ist, das zur Versteifung mit einem Kunstharz getränkt ist. Die durch Verformung des Gewebes oder Gewirkes entstandenen Noppen bilden Zwischenräume, die als Kanäle zum Verlegen von Kabeln im Inneren der Sandwich-Konstruktion verwendet werden können.

Die GB-A-2 127 062 beschreibt ein antistatisches Bodenbelagssystem mit einer Anzahl von Bodenfliesen, die elektrisch untereinander verbunden und geerdet sind mit Hilfe einer Carbonfaser-Matte, die unterhalb der Fliesen liegt.

Aufgabe der Erfindung ist es, einen Fußbodenbelag zu schaffen, der die Aufnahme handelsüblicher Kabel gestattet und durch den elektrostatische Aufladungen abgeleitet werden.

Zur Lösung dieser Aufgabe ist der erfindungsgemäße Bodenbelag, dadurch **gekennzeichnet**, daß die Grundplatte aus einem mit Kunstharz beschichteten, elektrisch leitende Fasern wie Carbonfäden oder Metallfäden enthaltenden und erhärteten Gewirke oder Gewebe gebildet ist, dessen Noppen mit Kunstharzbeton gefüllt sind.

Die fadenbildende Substanz des Gewirkes oder Gewebes kann vorzugsweise aus Polyester, Polyacrylnitril oder aus Glasfasern bestehen.

Als Kunstharz für die Imprägnierung des Gewirkes kommen vorzugsweise Kondensationsharze, wie Phenolharz, zur Anwendung. Bei einem Harzanteil von bis zu 50 Ge.-%, bezogen auf das imprägnierte Gewirke, erhält man nach dem Aushärten ein noch flexibles Grundplattenmaterial. Es ist von besonderem technischen und wirtschaftlichen Vorteil, das Produkt nicht nur als Plattenware, sondern auch als Bahnenware als Rollen zur Verfügung zu stellen zu können, die abgesehen von besserer Handhabung beim Transport und bei der Verlegung eine größere Sicherheit bietet. Damit können die elektrostatischen Spannungen besser kanalisiert und von den elektronischen Büromaschinen ferngehalten werden als bei der Fliesenform, da Fliesenkanten einen hohen Übergangswiderstand aufweisen können.

Die Verwendung eines Flächengebildes aus Fasermaterialien für die erfindungsgemäße Grundplatte ist auch im Hinblick auf die Füllung der Noppen zur Erhöhung der Druckfestigkeit vorteilhaft. Über die Poren und Zwischenräume der Faserstruktur erfolgt eine gute mechanische Bindung mit dem Füllmaterial. Dieses besteht vorzugsweise aus Polybeton, einem mit Polyesterharz gebundenen Quarzmehl.

Bei einem weiteren bevorzugten Ausführungsbeispiel können die vorbeschriebenen Noppen mit einem weitgehend starren Füllmaterial, vorzugsweise Kunststoffbeton z.B. aus mit Kunstharz (Polyesterharz) gebundenem Quarzmehl ausgefüllt werden, das beim flüssigen (plastischen) Einfüllen in die Maschen der Noppen eindringt.

Derartiges Füllmaterial zeigt eine gute Haftung in der gefüllten Noppe und unterstützt deren Schwerentflammbarkeit.

Derartige gefüllte Noppen besitzen eine hohe Festigkeit gegen mechanische Belastungen wie z.B. gefüllte Aktenschränke, Rollstühle od.dgl.

Der Fußbodenbelag gemäß der Erfindung zeichnet sich durch eine hohe Trittschall- und Wärmedämmung aus.

Weitere Merkmale der Erfindung ergeben sich aus den Unteransprüchen.

Der Schutzumfang erstreckt sich nicht nur auf die beanspruchten Einzelmerkmale, sondern auch auf deren Kombination.

Auf der Zeichnung sind Ausführungsbeispiele der Erfindung dargestellt. Es zeigen:

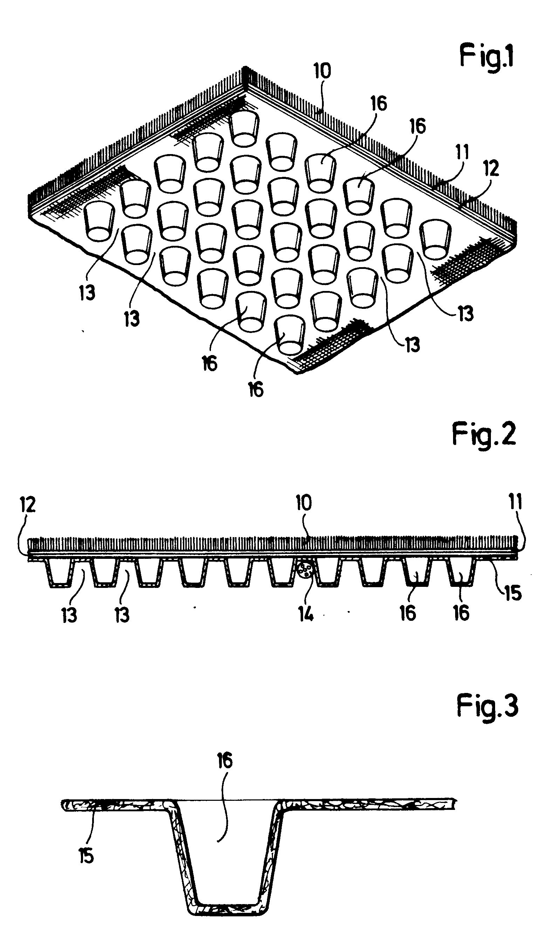

Fig. 1 eine perspektivische Ansicht eines Fußbodenbelages mit einem oberen Flor in einer Latexschicht und einer

2

Unterschicht mit einer darunter befestigten Grundschicht mit vorstehenden Noppen;

Fig. 2 einen Querschnitt durch denselben Fußbodenbelag;

Fig. 3 einen Querschnitt durch eine Noppe in vergrößerter Darstellung;

Fig. 4 eine Seitenansicht einer Grundplatte mit nach oben gerichteten leeren Noppen;

Fig. 5 einen Schnitt durch ein anderes Ausführungsbeispiel mit einer unteren Grundplatte mit mit Kunstharzbeton gefüllter Noppe und darüberliegendem Fußbodenbelag mit harter Zwischenplatte, Latexschicht und oberem Flor.

Ein Fußbodenbelag in Rollen- oder Fliesenform trägt auf seiner Oberseite einen Faserflor 10, der in einer Latexschicht 11 od.dgl. als Fixierschicht verankert ist. Unterhalb dieser Latexschicht 11 ist eine weichelastische Schicht wie Schaumgummischicht 12 od.dgl. angeklebt.

Zur Bildung von Kanälen 13, in die sich auf dem Boden verlegte Kabel 14 od.dgl. eindrücken, erstreckt sich erfindungsgemäß unterhalb der Schaumgummischicht 12 eine härtere Platte 15 mit nach unten vorstehenden Noppen 16, die aus der Platte 15 ausgepreßt in Reihen angeordnet sind.

Diese Platte 15 mit den herausgepreßten, in senkrecht zueinanderstehenden Reihen angeordneter Noppen 16 besteht aus einem Gewebe oder Gewirke aus Kunststoff-Fäden, die mit einem Kunststoff getränkt oder erhärtet einen leichten, aber statisch hoch belastbaren (druckfesten) Belag bilden.

Die Noppen 16 sind vorzugsweise konisch ausgebildet und benachbarte Noppen 16 erleichtern durch eine Art Trichterform damit das Einlegen (Eindrücken) ausgelegter Kabel 14 in die von den Noppen 16 gebildeten Kanäle.

Die Platte 15 mit den ausgeformten Noppen 16 wird beispielsweise dadurch gewonnen, daß ein Gewirke aus Chemiefasern (Fäden) oder Naturfasern mit einer Maschenweite von z.B. 1 mm auf den üblichen Wirk- oder Raschelmaschinen in Bahnen hergestellt wird. Diese Bahnen werden dann mit flüssigem Kunst-Harz getränkt und anschließend in vorkondensiertem Zustand mittels eines beheizten Werkzeuges mit Noppen 16 ausgeformt und anschließend ausgehärtet.

Es ist dabei von Vorteil, ein Faden-Material und einen Tränkstoff zu wählen, der schwerentflammbar ist.

Dabei kann es im Rahmen der Erfindung liegen, zusätzlich zu den Kunststoff-Fasern dünne stromleitende Carbonfäden, Metallfäden od.dgl. mit einzuarbeiten, welche die Aufgabe haben, elektrostatische Aufladungen abzuleiten.

Diese so ausgehärtete Platte 15 mit den nach unten vorstehenden Noppen 16 wird dann unter die Schaumstoffschicht 12 geklebt.

Bei der vorbeschriebenen Ausführungsform werden zunächst die Kabel o.dgl. auf dem Fußboden verlegt und dann von oben die Fliesen oder Rollen des Fußbodenbelages derart aufgelegt, daß sich die Kabel 14 od.dgl. in die zwischen den Noppen 16 gebildeten Kanäle 13 eindrücken und der Fußbodenbelag trotz der eingelegten Kabel 14 eine ebene Fläche zum Begehen usw. zeigt.

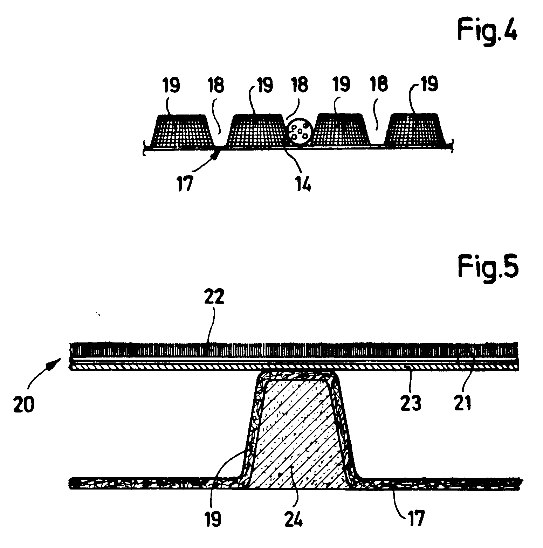

Bei dem in Fig. 4 dargestellten abgeänderten Ausführungsbeispiel wird zunächst eine Grundplatte 15 mit Noppen 19 - wie grundsätzlich vorbeschrieben - unmittelbar oder mit einer darunter befestigten Grundplatte 17 auf den Fußboden aufgelegt, dann in die nach oben offenen Kanäle 18 zwischen den nach oben vorstehenden Noppen 19 die Kabel 14 od.dgl. eingedrückt.

Auf diese Grundplatte 15 mit Noppen 19 wird dann eine Faserflorfliese 20 lose aufgelegt, die in bekannter Weise aus dem in der Latexschicht 21 verankerten Faserflor 22 gebildet ist und bei der unter der Latexschicht 21 eine harte Grundschicht 23 befestigt ist, die als Zwischenplatte lastverteilend auf die Noppen 19 wirkt. Diese Grundschicht 23 kann beispielsweise aus einer Stahlplatte gebildet sein, die als Rostschutz mit einer Aluminiumplattierung von beispielsweise 1 mm versehen sein kann.

Es kann bevorzugt sein, die Unterseite der auf der oberen Stirnfläche der Noppen 19 aufliegenden starren Grundschicht 23 (Zwischenplatte) mit einem Haftkleber zu beschichten, so daß jederzeit diese starre, lastverteilende Grundschicht mit darüber angeordnetem Faserflor 20 abgenommen und damit die Kanäle 18 geöffnet werden können, um die Kabel 14 zu kontrollieren bzw. auszutauschen.

Bei einer weiteren abgeänderten Ausführungsform gemäß Fig. 5 sind die in vergrößerter Darstellung gezeigten Noppen 19 mit einer weitgehend starren Masse 24 gefüllt, wie Kunstharzbeton, so daß die Noppen 19 eine hohe Standfestigkeit zeigen. Diese Füllung (Masse 24) beeinträchtigt jedoch nicht das Aufrollen derartiger Bahnen 15,17 aus vorbeschriebenem Gewirke oder Gewebe mit Kunststofftränkung. Diese Füllung dringt in vorteilhafter Weise in die Maschen der Noppen 16,19 ein. Die Druckfestigkeit der Grundplatte 17 mit Noppen 19 in Form eines Kegelstumpfes von 10 mm beträgt bei einer Polybeton-Füllung rd. 1600 N/cm$^2$.

Durch das Eindringen der Füllmasse 24 in die Maschen jeder Noppe 19 ergibt sich eine gute Haftung der Masse 24, die auch die Noppen 19 noch schwerer entflammbar macht und damit eine erhöhte Brandsicherheit bietet.

Neben den erfindungsgemäßen Geweben zeigen auch Gewirke eine hohe Dehnfähigkeit bei der Herausformung der Noppen 16,19 aus der ebenen Bahn.

Die mit Kunstharzbeton gefüllten Noppen erhöhen das Gewicht des Fußbodenbelages auf 4000 bis 6000 g/m$^2$.

## Patentansprüche

1. Fußbodenbelag mit einem in einer Latex-Polyvinylchlorid-Bitumen-Schicht (11) verankerten Faserflor (10), mit einer unterhalb dieser Schicht liegenden Unterschicht (12) und einer unterhalb der Unterschicht (12) liegenden Grundplatte (15,17) aus Kunststoff, die mit ausgeprägten, konischen Noppen (16,19) einstückig ausgestattet ist, die in Reihen mit Abstand unter Bildung von Kabelkanälen (13,18) einseitig vorstehen, dadurch **gekennzeichnet**, daß die Grundplatte (15,17) aus einem mit Kunstharz beschichteten, elektrisch leitende Fasern wie Carbonfäden oder Metallfäden enthaltenden und erhärteten Gewirke oder Gewebe gebildet ist, dessen Noppen (16,19) mit Kunstharzbeton (24) gefüllt sind.

2. Fußbodenbelag nach Anspruch 1, dadurch **gekennzeichnet**, daß das Gewirke oder Gewebe aus Chemiefasern wie Polyester-, Polyacrylnitrilfasern gebildet ist.

3. Fußbodenbelag nach Anspruch 1, dadurch **gekennzeichnet**, daß das Gewirke oder Gewebe aus Glasfasern gebildet ist.

4. Fußbodenbelag nach einem der Ansprüche 1 bis 3, dadurch **gekennzeichnet**, daß der Kunstharz ein Kondensationsharz wie Phenolharz ist.

5. Fußbodenbelag nach einem der Ansprüche 1 bis 4, dadurch **gekennzeichnet**, daß in die dehnbaren Maschen des Gewebes oder Gewirkes Kunstharzbeton eingedrückt ist.

6. Fußbodenbelag nach einem der Ansprüche 1 bis 5, dadurch **gekennzeichnet**, daß der Kunstharzbeton (24) aus Polybeton, einem mit Polyesterharz gebundenen Quarzmehl, besteht.

7. Fußbodenbelag nach einem der Ansprüche 1 bis 6, dadurch **gekennzeichnet**, daß der Fußbodenbelag mit den mit Kunstharzbeton (24) gefüllten Noppen (16,19) mit einem Gewicht von 4000 bis 6000 g/m$^2$ ausgestattet ist.

8. Fußbodenbelag nach einem der Ansprüche 1 bis 7, dadurch **gekennzeichnet**, daß auf nach oben vorstehenden Noppen (19) eine starre lastverteilende Grundschicht (23) aufliegt.

9. Fußbodenbelag nach einem der Ansprüche 1 bis 8, dadurch **gekennzeichnet**, daß der Harzanteil bezogen auf das imprägnierte Gewebe oder Gewirke bis zu 50 Gew.-% beträgt.

10. Fußbodenbelag nach einem der Ansprüche 1 bis 9, dadurch **gekennzeichnet**, daß die Unterschicht (12) als weichelastische Schicht wie Schaumgummischicht ausgebildet ist.

11. Fußbodenbelag nach einem der Ansprüche 1 bis 10, dadurch **gekennzeichnet**, daß das Gewirke oder Gewebe eine Dicke von 0,6 bis 1,2 mm aufweist und die Weite der Gewirke-, Gewebemaschen 0,8 bis 1,2 mm beträgt.

12. Fußbodenbelag nach einem der Ansprüche 1 bis 11, dadurch **gekennzeichnet**, daß die Noppen (16,19) einen Durchmesser von 8 bis 15 mm, eine Höhe von 10 bis 20 mm und einen Mittelabstand von 15 bis 35 mm aufweisen.

13. Fußbodenbelag nach einem der Ansprüche 1 bis 12, dadurch **gekennzeichnet**, daß die mit nach unten vorstehenden Noppen (16) ausgestattete Grundplatte (15) unter die weichelastische Unterschicht (12) geklebt ist.

14. Fußbodenbelag nach einem der Ansprüche 8 bis 12, dadurch **gekennzeichnet**, daß die Grundschicht (23) aus einer Stahlplatte mit Aluminiumplattierung gebildet ist.

## Claims

1. Floor covering with a fibrous web (10) which is anchored in a latex polyvinylchloride bitumen layer (11), with an underlayer (12) lying below this layer (11) and a plastics material base plate (15, 17) which lies below the underlayer (12) and is integrally provided with distinctive conical knobs (16, 19) which project on one side in rows at a distance forming cable ducts (13, 18), characterised in that the base plate (15, 17) is formed from a knitted or woven textile which is coated with synthetic resin, contains electrically conductive fibres such as carbon or metal fibres and is hardened and of which the knobs (16, 19) are filled with polymer-concrete composite material (24).

2. Floor covering according to Claim 1, characterised in that the knitted or woven textile is formed from chemical fibres such as polyester, polyacrylnitrile fibres.

3. Floor covering according to Claim 1, characterised in that the knitted or woven textile is formed from glass fibres.

4. Floor covering according to any one of Claims 1 to 3, characterised in that the synthetic resin is a condensation resin such as phenolic resin.

5. Floor covering according to any one of Claims 1 to 4, characterised in that polymer-concrete composite material is pressed into the expandable stitches of the knitted or woven fabric.

6. Floor covering according to any one of Claims 1 to 5, characterised in that the polymer-concrete composite material (24) comprises polyester concrete, a quartz powder bonded with polyester resin.

7. Floor covering according to any one of Claims 1 to 6, characterised in that the floor covering is provided with the knobs (16, 19) filled with polymer-concrete composite material (24) having a weight from 4000 to 6000 g/m$^2$.

8. Floor covering according to any one of Claims 1 to 7, characterised in that a rigid, load-bearing base layer (23) lies on upwardly projecting knobs (19).

9. Floor covering according to any one of Claims 1 to 8, characterized in that the proportion of resin relative to the impregnated knitted or woven textile is up to 50 weight %.

10. Floor covering according to any one of Claims 1 to 9, characterized in that the underlayer (12) is formed as a flexible layer such as a foam rubber layer.

11. Floor covering according to any one of Claims 1 to 10, characterized in that the woven or knitted textile is from 0.6 to 1.2 mm thick and the knitted or woven stitches are 0.8 to 1.2 mm wide.

12. Floor covering according to any one of Claims 1 to 11, characterized in that the knobs (16, 19) are from 8 to 15 mm in diameter, from 10 to 20 mm high and are at an average distance of from 15 to 35 mm.

13. Floor covering according to any one of Claims 1 to 12, characterized in that the base plate (15) equipped with downwardly projecting knobs (16) is stuck under the flexible underlayer (12).

14. Floor covering according to any one of Claims 8 to 12, characterised in that the base layer (23) is formed of a steel plate with aluminium plating.

**Revendications**

1. Revêtement de sol équipé d'un voile de carde- (10) ancré dans une couche de latex-chlorure de polyvinyle-bitume (11), d'une couche inférieure (12) se trouvant au-dessous de cette couche et d'une plaque d'assise (15,17) se trouvant au-dessous de la couche inférieure- (12), en matière plastique, qui est munie de boutons coniques, estampés (16, 19) faisant corps avec elle, qui font saillie d'un côté en rangées espacées avec formation de caniveaux de câbles (13, 18), caractérisé en ce que la plaque d'assise (15,17) est formée par un tricot ou un tissu durci et contenant des fibres électriquement conductrices, tels que des fils de carbone ou métalliques, revêtues de résine synthétique, dont les boutons (16,19) sont remplis de béton à base de résine synthétique (24).

2. Revêtement de sol selon la revendication 1, caractérisé en ce que le tricot ou le tissu est constitué de fibres chimiques, telles que des fibres de polyester ou de polyacrylonitrile.

3. Revêtement de sol selon la revendication 1, caractérisé en ce que le tricot ou le tissu est constitué de fibres de verre.

4. Revêtement de sol selon l'une des revendications 1 à 3, caractérisé en ce que la résine synthétique est une résine de condensation telle que de la résine phénolique.

5. Revêtement de sol selon l'une des revendications 1 à 4, caractérisé en ce que dans les mailles extensibles du tissu ou du tricot est enfoncé du béton à base de résine synthétique.

6. Revêtement de sol selon l'une des revendications 1 à 5, caractérisé en ce que le béton à base de résine synthétique (24) se compose de polybéton, avec de la farine de quartz liée par une résine polyester.

7. Revêtement de sol selon l'une des revendications 1 à 6, caractérisé en ce que le revêtement de sol équipé avec les boutons (16,19) remplis de béton à base de résine synthétique (24), présente un poids de 4.000 à 6.000 g/m$^2$.

8. Revêtement de sol selon l'une des revendications 1 à 7, caractérisé en ce que,sur les boutons (19) faisant saillie vers le haut, repose une couche d'assise (23) rigide de répartition de charge.

9. Revêtement de sol selon l'une des revendications 1 à 8, caractérisé en ce que la proportion de résine, rapportée au tissu ou au tricot imprégné,s'élève jusqu'à 50% en poids.

10. Revêtement de sol selon l'une des revendications 1 à 9, caractérisé en ce que la couche inférieure (12) est réalisée sous la forme d'une couche élastique molle, telle qu'une couche de caoutchouc mousse.

11. Revêtement de sol selon l'une des revendications 1 à 10, caractérisé en ce que le tricot ou le tissu présente une épaisseur de 0,6 à 1,2 mm et l'ouverture des mailles du tricot ou du tissu est comprise entre 0,8 et 1,2 mm.

12. Revêtement de sol selon l'une des revendications 1 à 11, caractérisé en ce que les boutons (16, 19) présentent un diamètre de 8 à 15 mm, une hauteur de 10 à 20 mm et un écartement moyen de 15 à 35 mm.

13. Revêtement de sol selon l'une des revendications 1 à 12, caractérisé en ce que la plaque d'assise (15) munie de boutons (16) faisant saillie vers le bas est collée au-dessous de la couche inférieure élastique molle (12).

14. Revêtement de sol selon l'une des revendications 8 à 12, caractérisé en ce que la couche d'assise (23) est formée par une plaque d'acier revêtue d'aluminium.

Fig.1

Fig.2

Fig.3

Fig.4

19  18  19  18  19  18  19

17

14

Fig.5

22

20

23  21

19  24  17